# EUROPÄISCHE PATENTSCHRIFT

(11) **EP 4 069 550 B1**
(45) Veröffentlichungstag und Bekanntmachung des Hinweises auf die Patenterteilung: **19.03.2025**
(21) Anmeldenummer: 20824113.3
(22) Anmeldetag: 27.11.2020
(51) Int. Cl.: B60M 1/28, B61K 9/08, B61L 23/04

(54) **MESSVORRICHTUNG ZUR ERMITTLUNG DER FAHRDRAHTLAGE**
MEASURING DEVICE FOR ASCERTAINING THE POSITION OF AN OVERHEAD LINE
DISPOSITIF DE MESURE POUR DÉTERMINER LA POSITION D'UNE LIGNE AÉRIENNE

(30) Priorität: 05.02.2020 DE 102020201401
(43) Veröffentlichungstag der Anmeldung: 12.10.2022
(73) Patentinhaber: Siemens Mobility GmbH, 81739 München (DE)
(72) Erfinder: GRÄFING, Jan, 12359 Berlin (DE); KLUCKNER, Stefan, 12487 Berlin (DE); MIRTSCHIN, Karsten, 15711 Zeesen (DE); TÖLG, Tobias, 14542 Werder (DE); WENKLER, Artur, 12489 Berlin (DE)
(74) Vertreter: Siemens Patent Attorneys
(86) Internationale Anmeldenummer: PCT/EP2020/083585
(87) Internationale Veröffentlichungsnummer: WO 2021/155972

(56) Entgegenhaltungen:
- EP-A1- 2 966 400
- EP-A1- 3 199 910
- WO-A2-02/21445
- US-A1- 2013 287 262
- HOEFLER H ET AL: "FAHRDRAHTLAGEMESSUNG AUF HOCHGESCHWINDIGKEITSSTRECKEN", EB- ELEKTRISCHE BAHNEN, DIV-DEUTSCHER INDUSTRIEVERLAG, DE, vol. 96, no. 3, 1 March 1998 (1998-03-01), pages 61 - 64, XP000740103, ISSN: 0013-5437

## Beschreibung

Für einen störungsfreien Betrieb von elektrischen Bahnen auf Gleisen mit einer Oberleitungsanlage kommt der Einhaltung der Fahrdrahtlage eine besondere Bedeutung zu. Die Fahrdrahthöhe über der Schienenoberkante sowie die Fahrdrahtseitenlage relativ zur Gleismitte sind daher Gegenstand von Normen. So beträgt nach DIN EN 50119 beispielsweise für die Oberleitungsbauart Re 330 die Mindest-Fahrdrahthöhe 5070 mm und die Regel-Fahrdrahthöhe 5300 mm über Schienenoberkante, während die Fahrdrahtseitenlage ± 300 mm von der Gleismitte - insbesondere durch den Zickzackverlauf des Fahrdrahtes bedingt - abweichen darf. Fahrdrähte, die außerhalb eines vorgegebenen Bereiches liegen, können zu Lichtbogenbildung an der Schnittstelle zwischen Stromabnehmer und Fahrdraht sowie zu Fehlfunktionen führen, was schwere Schäden an Bauteilen der Oberleitungsanlage und des Stromabnehmers verursachen kann.

Zur Überprüfung der aktuellen Fahrdrahtlage sind spezielle Messfahrzeuge bekannt, deren Messvorrichtungen nur Fahrgeschwindigkeiten von beispielsweise 120 km/h zulassen. Hinzu kommt, dass für die Messfahrzeuge neben dem regulären Personen- und Güterverkehr Trassen - also Zeitschlitze im Fahrplan - zu reservieren sind, was bei heutigen Gleisbelegungen oft problematisch ist.

Aus der Patentschrift DE 10 2013 217 160 B3 ist ein Verfahren zur Vermessung der Fahrdrahthöhen und -seitenlage der Oberleitung eines Gleises bekannt. Mittels der rotierenden Spiegel von zwei oder mehreren auf dem Dach eines Schienenfahrzeugs installierten Fächerlasern wird das Umgebungsprofil innerhalb eines vordefinierten Abtastbereichs erfasst, aus dem die Fahrdrahtlage des darin erfassten Fahrdrahtes mittels geeigneter Filteralgorithmen herausgefiltert wird. Nach jedem Abtastzyklus werden durch die Scanner Datentelegramme mit Winkel- und Abstandswerten zu erkannten Oberflächen oder Objekten erstellt. Die Abtastwinkel der Abtastlaserstrahlen weisen zueinander eine Phasenverschiebung von 360°/Anzahl der verwendeten Fächerlaser auf.

Aus EP 2 966 400 A1 ist ein Messfahrzeug mit einer Vorrichtung zur berührungslosen dreidimensionalen Messung der Position einer Oberleitung bekannt. Die Positionsmessvorrichtung umfasst zwei in Fahrtrichtung nebeneinander angeordnete Laserscanner zur Bestimmung der Oberleitungsposition anhand von erfassten Winkel- und Abstandsdaten. Die Vorrichtung umfasst ferner zwei ebenfalls in Fahrtrichtung nebeneinander angeordnete Zeilenkameras, deren Sensorpixelzeilen sich entlang der Kameraverbindungslinie erstrecken und jeweils Bilddaten eines eindimensionalen Bildes erfassen. Anhand der erfassten Winkel- und Abstandsdaten wird ein interessierender Bildbereich in den eindimensionalen Bildern festgelegt und der Bildbereich außerhalb des interessierenden Bildbereichs maskiert. Dabei werden die aufeinanderfolgend erfassten, maskierten Bilddaten in einem Speicher angesammelt. Aus angesammelten maskierten eindimensionalen Bilddaten der beiden Zeilenkameras wird ein zweidimensionales Bild erzeugt, aus dem die Oberleitungsposition bestimmt wird.

Die EP 3 199 910 A1 offenbart ein Zeilenmessgerät mit drei Zeilensensorkameras zur Aufnahme von Oberleitungen. Die Zeilensensorkameras sind mittig und beidseitig nebeneinander auf einem Fahrzeug angeordnet, um Bilder der Oberleitung aufzunehmen. Es erfolgt eine Bildverarbeitung der aufgenommenen Oberleitungsbildern, um mittels Stereomessung eine Höhen- und Seitenlage der Oberleitung zu ermitteln. Dazu weist die mittig angeordnete Zeilensensorkamera einen Bilderfassungsbereich auf, der den gesamten Bereich erfasst, innerhalb dessen eine Oberleitung vorhanden sein kann, während die beiden seitlich angeordneten Zeilensensorkameras je die Hälfte dieses Bereichs erfassen.

Die WO 02/21445 A2 zeigt eine Anordnung zur Ermittlung einer Veränderung eines Referenzobjekts, welches einem Fahrweg zugeordnet ist. Auf einem Dach eines Inspektionsfahrzeugs befinden sich vier optische Aufnahmesysteme der Anordnung, die während einer Inspektionsfahrt an vor-gegebenen Aufnahmeorten berührungslos aus verschiedenen Richtungen jeweils für einen Ort zueinandergehörige Bilder von allen Elementen einer Oberleitung sowie deren Oberflächen aufnehmen. Eines der vier optische Aufnahmesystem dient zur Überwachung und Inspektion des Fahrdrahts. Zur Auswertung der aufgenommenen Bilder wird ein Referenzbildvergleich durchgeführt.

Fächerlaser sind aufgrund der verwendeten Lidarsensoren sehr kostspielig in der Anschaffung und im Hochgeschwindigkeitsbetrieb aufgrund beweglicher Bauteile, wie des rotierenden Spiegels, anfällig und wartungsaufwändig. Die Aufnahmerate ist durch den zeilenweise Bildaufbau des abtastenden Laserstrahl begrenzt.

Der Erfindung liegt daher die Aufgabe zugrunde, eine verbesserte Messvorrichtung der eingangs genannten Art bereitzustellen, welche die Fahrdrahtlage auch im Hochgeschwindigkeitsbetrieb eines die Messvorrichtung mitführenden Schienenfahrzeugs von bis zu 400 km/h zu erfassen vermag.

Die Aufgabe wird gelöst durch eine gattungsgemäße Messvorrichtung mit den im Patentanspruch 1 angegebenen Merkmalen. Die Messvorrichtung ist geeignet und dazu vorgesehen die Relativlage eines Fahrdrahtes einer einem Gleis zugeordneten Oberleitungsanlage zu einem das Gleis befahrenden Schienenfahrzeug zu ermitteln. Die Messvorrichtung umfasst eine auf dem Schienenfahrzeug angeordnete Laufzeitkameraanordnung zur Erfassung von Bilddaten mit Tiefeninformation eines den Fahrdraht enthaltenden Erfassungsbereiches. Ferner umfasst die Messvorrichtung eine Auswertungseinheit, die dazu ausgebildet ist, anhand unterschiedlicher Schätzverfahren Lagedaten des Fahrdrahtes abzuschätzen und durch räumliche und zeitliche Fusion der Lagedaten die Relativlage des Fahrdrahtes zu ermitteln.

Die Anordnung weist mehrere Laufzeitkameras auf. Laufzeitkameras sind an sich bekannt und umfassen eine Beleuchtungseinheit zum Aussenden von den Fahrdraht beleuchtenden Lichtimpulsen, eine Optikeinheit zum Abbilden des vom Fahrdraht reflektierten Lichts auf eine Sen-soranordnung sowie eine Ansteuerelektronik zum zeitlich abge-stimmten Ansteuern der Beleuchtungseinheit und der Sensoran-ordnung. Die Sensoranordnung weist eine matrixförmige Anord-nung von Sensorpixeln zum Sammeln einfallender Lichtimpulse und zum Messen der Laufzeit zwischen dem Aussenden eines Lichtimpulses und dessen Einfallen auf die jeweiligen Sensor-pixel auf. Zum Eliminieren störenden Hintergrundlichts kann ein auf die Frequenz des Lichtimpulses abgestimmtes Bandpass-filter verwendet werden.

Vorzugsweise kommen als Beleuchtungseinheit Laserdioden der Klasse 1 mit hohen Intensitäten bei einer Wellenlänge von 850 nm zum Einsatz, um möglichst kurze Integrationszeiten der Sensorpixel zu erreichen. Durch die Verwendung von mehreren Laufzeitkameras kann durch deren gegenseitige Anordnung und Ausrichtung ihrer Sichtfelder ein sich ausreichend seitlich und nach oben erstreckender Erfassungsbereich gebildet werden, so dass Fahrdrähte in unterschiedlichen Höhen- und Seitenlagen erfasst werden können. Für eine Aufnahme einer Laufzeitkamera werden mehrere, beispielsweise vier Einzelbilder erfasst und übereinandergelegt, um den Rauschanteil zu minimieren. Die Bilddaten mit Tiefeninformation werden als Rohdaten einer Auswertungseinheit zugeführt, die dazu ausgebildet ist, anhand unterschiedlicher Schätzverfahren Lagedaten des Fahrdrahtes abzuschätzen. Zur Anwendung können beispielsweise geometrische, auf maschinellem Lernen basierte und auf Filter basierte Verfahren. Jedes Schätzverfahren schätzt die Lagedaten des Fahrdrahtes ab. Schließlich wird durch räumliche und zeitliche Fusion der Lagedaten die Relativlage des Fahrdrahtes in Form von Polar- oder kartesischen Koordinaten relativ zu einem Referenzpunkt ermittelt. Durch die Verwendung einer Laufzeitkamera wird ein Kostenvorteil gegenüber Fächerlasern erreicht. Eine robuste Kalibrierung der Laufzeitkameraanordnung ermöglicht eine große Betriebsdauer bis zur nächsten Wartung, wozu auch beiträgt, dass im Vergleich zu Fächerlasern keine beweglichen Bauteile vorhanden sind.

Die Laufzeitkameraanordnung weist eine Mehrzahl an Laufzeitkameras auf, wobei jede Laufzeitkamera eine Sensoranordnung mit einer matrixartigen Anordnung von Sensorpixeln aufweist, und wobei zur Reduzierung der Aufnahmezeit für hohe Fahrgeschwindigkeiten des Schienenfahrzeugs die Anzahl an auszulesenden Zeilen von Sensorpixeln adaptierbar ist. Der Einsatz der erfindungsgemäßen Messvorrichtung in Schienenfahrzeugen des regulären Fahrbetriebs, beispielsweise in Zügen des Personenverkehrs, erfordert deren Funktionstüchtigkeit auch bei hohen Fahrgeschwindigkeiten von beispielsweise über 200 km/h bis zu 400 km/h. Aufgrund der Relativbewegung zwischen der Messvorrichtung und dem Fahrdraht sammelt jedes Sensorpixel Licht, welches von einem geschwindigkeitsabhängigen Längsabschnitt des Fahrdrahts reflektiert wird. Die Auslese- und Integrationszeiten für eine vollständig Sensorauflösung von beispielsweise 352 x 288 Sensorpixeln sind zu lang für ho-he Fahrgeschwindigkeiten, da dies zu Bewegungsunschärfen in den aufgenommenen Bilddaten führt. Es wird daher ein interessierender Bereich an Sensorpixeln definiert, der die Anzahl an auszulesenden Zeilen von Sensorpixeln begrenzt, beispielsweise auf 32 x 288 Sensorpixeln. Dabei sind die 32 Zeilen in Fahrzeuglängsrichtung aneinandergereiht. Hierdurch wird eine erhebliche Verkürzung der Auslesezeit erreicht und Unschärfeeffekte vermieden.

Die Laufzeitkamera-anordnung umfasst eine erste Laufzeitkamera, die in Fahrzeugmitte angeordnet ist und eine Optikeinheit aufweist mit vertikaler optischer Achse und mit einer Brennweite zur Erfassung von Fahrdrähten, die in einem nahen, unteren Abschnitt des Erfassungsbereichs verlaufen. Ferner umfasst sie eine zweite Laufzeitkamera, die in Fahrzeugmitte angeordnet ist und eine Optikeinheit aufweist mit vertikaler optischer Achse und mit einer Brennweite zur Erfassung von Fahrdrähten, die in einem fernen, oberen Abschnitt des Erfassungsbereichs verlaufen. Des Weiteren umfasst die Laufzeitkameraanordnung eine dritte Laufzeitkamera und eine vierte Laufzeitkamera, die symmetrisch außerhalb der Fahrzeugmitte angeordnet sind und eine Optikeinheit aufweisen mit gegen die Fahrzeugmitte um einen spitzen Winkel nach außen verkippten optischen Achsen und mit einer Brennweite zur Erfassung von Fahrdrähten, die in seitlichen Randbereichen des nahen, unteren Abschnitts des Er-fassungsbereichs verlaufen. Durch die unterschiedlichen Öffnungswinkel und Achsausrichtungen der Kamerasichtfelder sowie der unterschiedlichen Brennweiten wird der Fahrdraht je nach Lage im Erfassungsbereich mit unterschiedlichen räumlichen Auflösungen (engl. Ground Sampling Distance, kurz GSD) abgebildet. Geht man von einem Durchmesser des Fahrdrahtes von 19 mm aus, so werden Fahrdrähte in annähernd maximaler Fahrdrahthöhe auf eine Zeile von Sensorpixeln abgebildet, während tiefer liegende Fahrdrähte in etwa nominaler Fahrdrahthöhe auf zwei Zeilen von Sensorpixeln abgebildet werden. Noch tiefer und auch seitlich liegende Fahrdrähte bis hin zur minimalen Fahrdrahthöhe werden auf drei Zeilen von Sensorpixeln abgebildet.

In einem bevorzugten Ausführungsbeispiel umfasst die erfindungsgemäße Messvorrichtung mindestens eine Videokamera zur Erfassung von Bilddaten mit Farbinformation des den Fahrdraht enthaltenden Erfassungsbereichs und eine Auswertungseinrichtung für die Bilddaten zur Störungsüberprüfung der Laufzeitkameraanordnung. Durch die Videokamera kann auf einfache Weise festgestellt werden, ob die Bilddatenerfassung der Laufzeitkameras durch Verschmutzungen oder Fremdkörper in deren Sichtfeld gestört ist.

In einem weiteren bevorzugten Ausführungsbeispiel der erfindungsgemäßen Messvorrichtung weist die Laufzeitkameraanordnung eine Ansteuereinheit zum sequenziellen Auslösen der Laufzeitkameras nach Art einer Master-Slave-Anordnung auf. Zur Vermeidung einer gegenseitigen Beeinflussung der den Laufzeitkameras zugeordneten Beleuchtungseinheiten werden die Laufzeitkameras nicht simultan, sondern sequenziell nach Art einer Master-Slave-Anordnung ausgelöst. Nach Systemstart erhält die als Master ausgebildete, erste Laufzeitkamera ein Auslösesignal. Wird ein Bild empfangen, sendet diese ein Auslösesignale an die als Slaves ausgebildeten, zweiten, dritten und vierten Laufzeitkameras. Werden vier Bilder empfangen, so arbeiten Master und Slaves zyklisch mit einer Wiederholfrequenz von beispielsweise 30 Hz. Hierdurch wird eine Messewertrate für eine ausreichende räumliche Auflösung auch bei hohen Fahrgeschwindigkeiten erreicht.

In einem weiteren bevorzugten Ausführungsbeispiel der erfindungsgemäßen Messvorrichtung bilden voneinander beabstandet angeordnete Laufzeitkameras eine Stereobasis, wobei die Auswertungseinheit dazu ausgebildet ist, Bilddaten von Laufzeitkameras einer Stereobasis zu Stereo-Bilddaten zu kombinieren und daraus Stereo-Lagedaten des Fahrdrahts zu ermitteln, und anhand der Stereo-Lagedaten die Lagedaten der Laufzeitkameras auf Plausibilität zu prüfen. Kurze Integrationszeiten der Laufzeitkameras kombiniert mit einem geeigneten Bildformat führen zu einer Aufnahmeüberlappung unterhalb einer gewissen Fahrgeschwindigkeit. Diese Aufnahmeüberlappung kann dazu verwendet werden, um die Fahrdrahtposition jeder der Laufzeitkameras mit Hilfe einer stereoskopischen Basis der Laufzeitkameras als ein zweites unabhängiges Messprinzip zu plausibilisieren.

In einem weiteren bevorzugten Ausführungsbeispiel der erfindungsgemäßen Messvorrichtung sind die Laufzeitkameraanordnung, die Auswerteeinheit und die Ansteuereinheit in einem abgedichteten Gehäuse mit einer Kameraöffnungen und Beleuchtungsöffnungen aufweisenden Deckplatte und mit einer Schnittstelle zur Anbindung an das Schienenfahrzeug angeordnet. Das Gehäuse ist mit einem Untergestell verbunden, welches mit der Dachkonstruktion des Schienenfahrzeugs verschraubt werden kann. Das Gehäuse ist wasser- und staubdicht und weist eine beispielsweise quadratische Deckplatte auf, die im montierten Zustand stufenlos durch eine Dachhutze des Schienenfahrzeugs fortgesetzt wird. Der Mittelpunkt der Deckplatte kann als Referenzpunkt für die Messvorrichtung dienen. Die Deckplatte weist Beleuchtungsöffnungen für den Lichtaustritt der Beleuchtungseinheiten sowie Kameraöffnungen für den Lichteintritt zu den Sensoranordnungen der Laufzeitkameras und der Videokameras auf. An der Unterseite weist das Gehäuse Leitungsdurchgänge für Daten- und Energieversorgungsleitungen auf.

In einem weiteren bevorzugten Ausführungsbeispiel der erfindungsgemäßen Messvorrichtung ist die Auswertungseinheit mit einem Bewegungssensor zur Erfassung einer betriebsbedingten Bewegung des Referenzpunktes relativ zur Schienenoberkante und/oder zur Gleismitte verbunden. Der Bewegungssensor kann Wank-, Nick-, Gier- und Hubbewegungen des Wagenkastens des Schienenfahrzeugs relativ zur Schienenoberkante erfassen, wodurch die auf den Referenzpunkt bezogenen Lagedaten des Fahrdrahts korrigiert und auf die Schienenoberkante bezogen werden können. Hierdurch ist ein unmittelbarer Vergleich der gemessenen Relativlage mit normativ vorgegebenen Fahrdrahthöhen und -seitenlagen möglich.

In einem weiteren bevorzugten Ausführungsbeispiel der erfindungsgemäßen Messvorrichtung ist die Auswertungseinheit mit einem Positionssensor zur Erfassung einer aktuellen Position des Schienenfahrzeugs verbunden. Der Positionssensor kann einen Empfänger eines Satellitensystems zur Positionsbestimmung des Schienenfahrzeugs aufweisen. Dadurch können die erfassten Fahrdrahtlagedaten mit der zugehörigen Fahrzeugposition kombiniert werden, um die Lagedaten längs einer befahrenen Gleisstrecke darstellen zu können.

Die Erfindung bezieht sich auch auf ein Schienenfahrzeug mit einer Messvorrichtung nach einem der Ansprüche 1 bis 9.

Weitere Eigenschaften und Vorteile der Erfindung ergeben sich aus nachfolgender Beschreibung eines Ausführungsbeispiels anhand der Zeichnungen, in deren
- FIG 1: ein Ausschnitt einer perspektivischen Ansicht auf ein Schienenfahrzeug mit integrierter, erfindungsgemäßer Messvorrichtung,
- FIG 2: eine perspektivische Ansicht der erfindungsgemäßen Messvorrichtung,
- FIG 3: einen Querschnitt durch den Erfassungsbereich der erfindungsgemäßen Messvorrichtung und
- FIG 4: Diagramme von mit der erfindungsgemäßen Messvorrichtung ermittelten Fahrdrahtseitenlagen und Fahrdrahthöhen längs des vom Schienenfahrzeug zurückgelegten Weges
schematisch veranschaulicht sind.

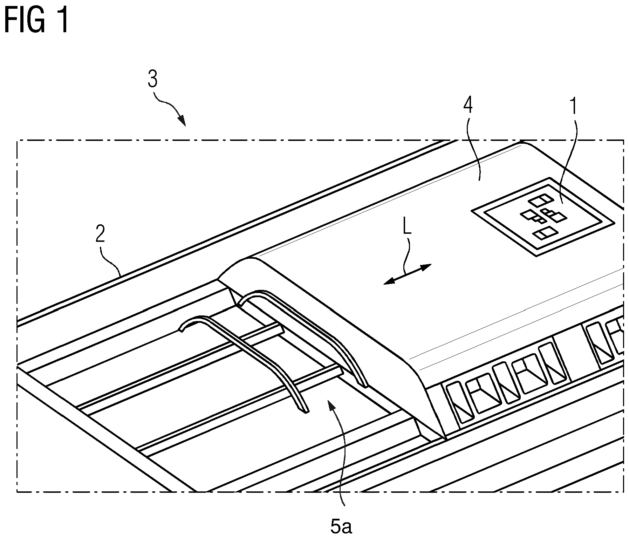

Gemäß FIG 1 ist eine Messvorrichtung 1 zur Ermittlung einer Relativlage eines Fahrdrahtes 2 einer nicht weiter dargestellten Oberleitungsanlage zu einem das Gleis befahrenden Schienenfahrzeug 3 im Dachbereich des Schienenfahrzeugs 3 integriert und schließt nach oben bündig mit einer Dachhutze 4 ab. Das Schienenfahrzeug 3 kann ein Hochgeschwindigkeitszug mit einem Stromabnehmer 5a sein, der zur Energieeinspeisung den Fahrdraht 2 kontaktieren kann.

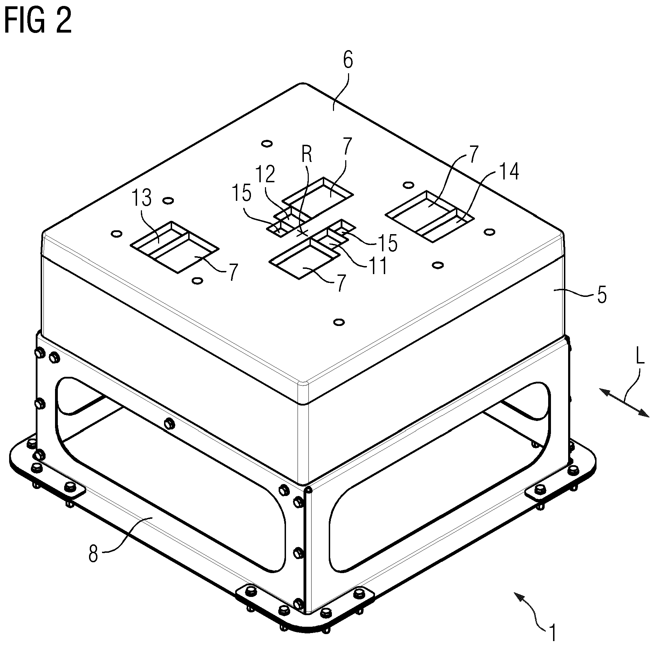

Die Messvorrichtung 1 weist gemäß FIG 2 ein abgedichtetes Gehäuse 5 mit einer quadratischen Deckplatte 6 auf, die Kameraöffnungen und Beleuchtungsöffnungen aufweist. Das Gehäuse 5 ist mit einem Untergestell 8 verbunden, welches mit der Dachkonstruktion des Schienenfahrzeugs 3 verschraubt werden kann. Der Mittelpunkt der Deckplatte 6 dient als Referenzpunkt R für die Messvorrichtung 1. Durch die Beleuchtungsöffnungen treten Lichtimpulse von Beleuchtungseinheiten 7 in Form von Laserdioden mit 850 nm Wellenlänge aus, die vom Fahrdraht 2 reflektiert durch die Kameraöffnungen einer ersten Laufzeitkamera 11, einer zweiten Laufzeitkamera 12, einer dritten Laufzeitkamera 13 und einer vierten Laufzeitkamera 14 auf diesen jeweils zugeordneten Sensoranordnungen auftreffen. Ferner weist die Deckplatte 6 zwei Kameraöffnungen für Videokameras 15 zur Erfassung von Bilddaten mit RGB-Farbinformation des den Fahrdraht 2 enthaltenden Erfassungsbereichs.

Die Laufzeitkameras 11, 12, 13, 14 bilden mit ihren Beleuchtungseinheiten und mit - ebenfalls im Gehäuse 5 angeordnet - einer Auswerteeinheit und Ansteuereinheit eine Mehrfach-Laufzeitkameraanordnung zur Erfassung von Bilddaten mit Tiefeninformation eines den Fahrdraht 2 enthaltenden Erfassungsbereiches 16 der Breite S.

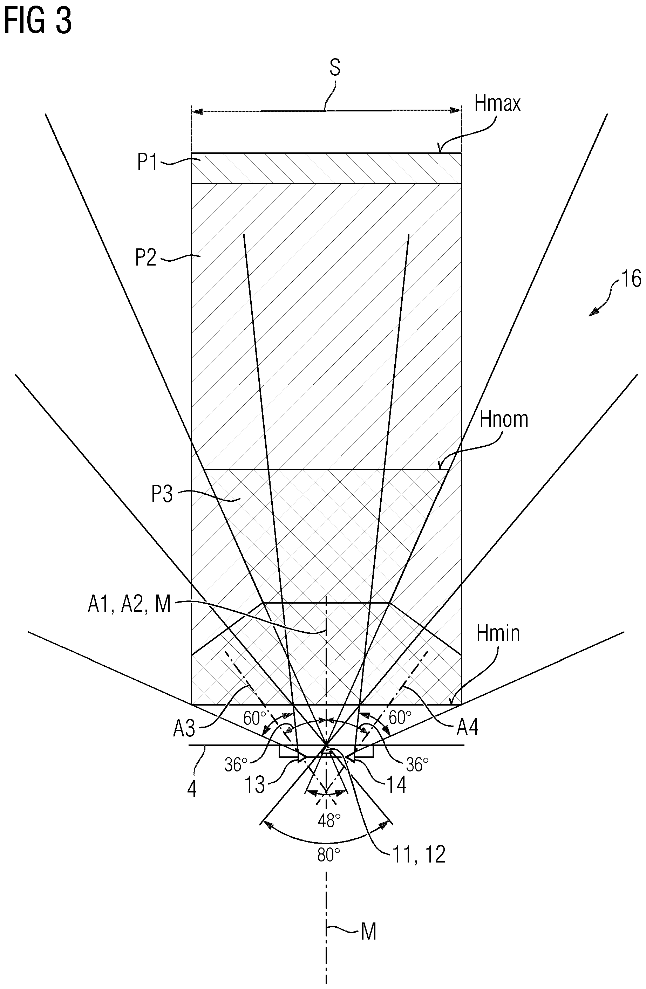

Gemäß FIG 3 sind die erste Laufzeitkamera 11 und die zweite Laufzeitkamera 12 in Fahrzeugmitte M hintereinander angeordnet und weisen eine Optikeinheit mit vertikalen optischen Achsen A1 bzw. A2 auf. Die Brennweite der ersten Laufzeitkamera 11 ermöglicht in einem Sichtfeld mit einem Öffnungswinkel von 80° eine Erfassung von Fahrdrähten 19, die in einem nahen, unteren Abschnitt 16U des Erfassungsbereichs 16 zwischen einer minimalen Fahrdrahthöhe Hmin und einer nominalen Fahrdrahthöhe Hnom verlaufen. Die Brennweite der zweiten Laufzeitkamera 12 ermöglicht in einem Sichtfeld mit einem Öffnungswinkel von 48° eine Erfassung von Fahrdrähten 19, die in einem fernen, oberen Abschnitt 16O des Erfassungsbereichs 16 zwischen der nominalen Fahrdrahthöhe Hnom und einer maximalen Fahrdrahthöhe Hmax verlaufen. Die dritte Laufzeitkamera 13 und die vierte Laufzeitkamera 14 sind symmetrisch außerhalb der Fahrzeugmitte M und in Fahrzeuglängsrichtung L versetzt angeordnet und weisen Optikeinheiten mit gegen die Fahrzeugmitte M um einen Winkel von 36° nach außen verkippten optischen Achsen A3, A4 auf. Die Brennweiten der dritten und vierten Laufzeitkameras 13, 14 ermöglichen in Sichtfeldern mit einem Öffnungswinkel von 60° eine Erfassung von Fahrdrähten 19, die in seitlichen Randbereichen 16S des nahen, unteren Abschnitts 16U des Erfassungsbereichs 16 verlaufen. Durch die unterschiedlichen Öffnungswinkel und Achsausrichtungen der Kamerasichtfelder sowie der unterschiedlichen Brennweiten wird der Fahrdraht 2 je nach Lage im Erfassungsbereich 16 mit unterschiedlichen räumlichen Auflösungen (engl. Ground Sampling Distance, kurz GSD) abgebildet. Geht man von einem Durchmesser des Fahrdrahtes von 19 mm aus, so werden Fahrdrähte 2 im Auflösungsgebiet P1 (Schraffur nach rechts unten) in annähernd maximaler Fahrdrahthöhe Hmax auf eine Zeile von Sensorpixeln abgebildet, während tiefer liegende Fahrdrähte 2 im Auflösungsgebiet P2 (Schraffur nach rechts oben) auf etwa nominaler Fahrdrahthöhe Hnom auf zwei Zeilen von Sensorpixeln abgebildet werden. Noch tiefer und auch seitlich liegende Fahrdrähte 2 bis hin zur minimalen Fahrdrahthöhe Hmin im Auflösungsgebiet P3 (Kreuzschraffur) werden auf drei Zeilen von Sensorpixeln abgebildet.

Die von der Laufzeitkameraanordnung erfassten Bilddaten mit Tiefeninformation werden einer Auswertungseinheit zugeführt, um anhand unterschiedlicher Schätzverfahren Lagedaten des Fahrdrahtes 2 abzuschätzen und durch räumliche und zeitliche Fusion der Lagedaten die Relativlage des Fahrdrahtes 2 zu ermitteln. Durch die Videokameras 15 kann auf einfache Weise festgestellt werden, ob die Bilddatenerfassung der Laufzeitkameras 11, 12, 13, 14 durch Verschmutzungen oder Fremdkörper in deren Sichtfeld gestört ist. Für eine Aufnahme einer Laufzeitkamera 11, 12, 13, 14 werden mehrere, beispielsweise vier Einzelbilder erfasst und übereinandergelegt, um den Rauschanteil zu minimieren. Zur Anwendung kommen geometrische, auf maschinellem Lernen basierte und auf Filtern basierte Verfahren. Jedes Schätzverfahren schätzt die Lagedaten des Fahrdrahtes 2 ab. Schließlich wird durch räumliche und zeitliche Fusion der Lagedaten die Relativlage des Fahrdrahtes in Form von Polar- oder kartesischen Koordinaten relativ zu einem Referenzpunkt ermittelt. Zur Reduzierung der Aufnahmezeit für hohe Fahrgeschwindigkeiten des Schienenfahrzeugs 3 ist die Anzahl an auszulesenden Zeilen von Sensorpixeln adaptierbar. Es wird ein interessierender Bereich an Sensorpixeln definiert, der die Anzahl an auszulesenden Zeilen von Sensorpixeln begrenzt, beispielsweise auf 32 x 288 Sensorpixeln. Dabei sind die 32 Zeilen in Fahrzeuglängsrichtung L aneinandergereiht. Hierdurch wird eine erhebliche Verkürzung der Auslesezeit erreicht und Unschärfeeffekte vermieden.

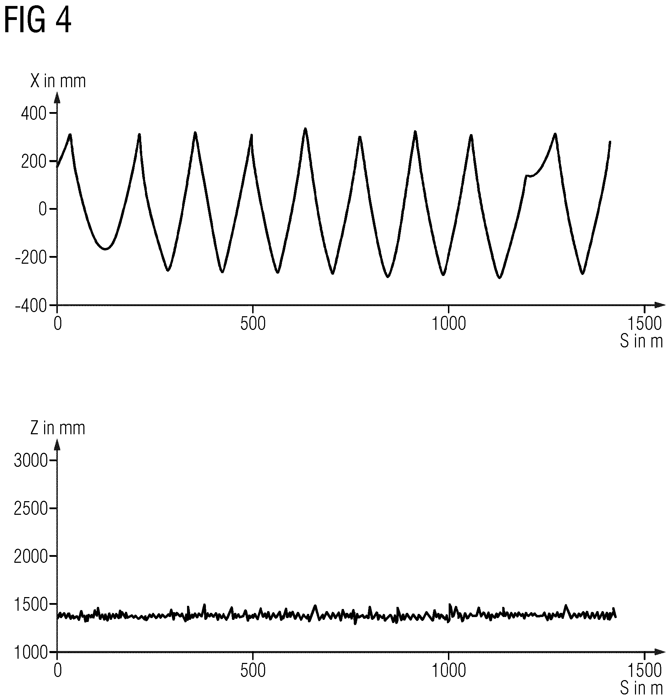

Die Auswertungseinheit ist mit einem Positionssensor zur Erfassung einer aktuellen Position des Schienenfahrzeugs, beispielsweise einem Empfänger eines Satellitensystems, verbunden, um gemäß FIG 4 die erfassten Fahrdrahtseitenlagen X und die erfassten Fahrdrahthöhen Z in Abhängigkeit der vom Schienenfahrzeug 3 zurückgelegten Streckenlänge S darstellen zu können.

## Patentansprüche

1. Messvorrichtung (1) zur Ermittlung der Relativlage eines Fahrdrahtes (2) einer einem Gleis zugeordneten Oberleitungsanlage zu einem das Gleis befahrenden Schienenfahrzeug (3), umfassend
- eine auf dem Schienenfahrzeug (3) angeordnete Laufzeitkameraanordnung zur Erfassung von Bilddaten mit Tiefeninformation eines den Fahrdraht (2) enthaltenden Erfassungsbereiches (16),
- wobei die Laufzeitkameraanordnung eine Mehrzahl an Laufzeitkameras (11, 12, 13, 14) aufweist,
**dadurch gekennzeichnet,**
- **dass** jede Laufzeitkamera (11, 12, 13, 14) eine Sensoranordnung mit einer matrixartigen Anordnung von Sensorpixeln aufweist,
- wobei zur Reduzierung der Aufnahmezeit für hohe Fahrgeschwindigkeiten des Schienenfahrzeugs (3) die Anzahl an auszulesenden Zeilen von Sensorpixeln adaptierbar ist,
- wobei die Laufzeitkameraanordnung
- eine erste Laufzeitkamera (11) umfasst, die in Fahrzeugmitte
(M) angeordnet ist und eine Optikeinheit aufweist mit vertikaler optischer Achse (A1) und mit einer Brennweite zur Erfassung von Fahrdrähten (2), die in einem nahen, unteren Abschnitt (16U) des Erfassungsbereichs (16) verlaufen,
- eine zweite Laufzeitkamera (12) umfasst, die in Fahrzeugmitte
(M) angeordnet ist und eine Optikeinheit aufweist mit vertikaler optischer Achse (A2) und mit einer Brennweite zur Erfassung von Fahrdrähten (2), die in einem fernen, oberen Abschnitt (16O) des Erfassungsbereichs (16) verlaufen, und
- eine dritte Laufzeitkamera (13) und eine vierte Laufzeit-kamera (14) umfasst, die symmetrisch außerhalb der Fahrzeugmitte (M) angeordnet sind und eine Optikeinheit aufweisen mit gegen die Fahrzeugmitte (M) um einen spitzen Winkel nach außen verkippten optischen Achsen (A3, A4) und mit einer Brennweite zur Erfassung von Fahrdrähten (2), die in seitlichen Randbereichen (16S) des nahen, unteren Abschnitts (16U) des Erfassungsbereichs (16) verlaufen, und
- wobei die Messvorrichtung (1) eine Auswertungseinheit umfasst, die dazu ausgebildet ist, anhand unterschiedlicher Schätzverfahren Lagedaten des Fahrdrahtes (2) abzuschätzen und durch räumliche und zeitliche Fusion der Lagedaten die Relativlage (X, Z) des Fahrdrahtes (2) zu ermitteln.

2. Messvorrichtung (1) nach Anspruch 1,
ferner umfassend
- mindestens eine Videokamera (15) zur Erfassung von Bilddaten mit Farbinformation des den Fahrdraht (2) enthaltenden Erfassungsbereichs (16) und eine Auswertungseinrichtung für die Bilddaten zur Störungsüberprüfung der Laufzeitkameraanordnung.

3. Messvorrichtung (1) nach Anspruch 1 oder 2,
- wobei die Laufzeitkameraanordnung eine Ansteuereinheit zum sequenziellen Auslösen der Laufzeitkameras (11, 12, 13, 14) nach Art einer Master-Slave-Anordnung aufweist.

4. Messvorrichtung (1) nach einem der Ansprüche 1 bis 3,
- wobei voneinander beabstandet angeordnete Laufzeitkameras (11, 12, 13, 14) eine Stereobasis bilden,
- wobei die Auswertungseinheit dazu ausgebildet ist, Bilddaten von Laufzeitkameras (11, 12, 13, 14) einer Stereobasis zu Stereo-Bilddaten zu kombinieren und daraus Stereo-Lagedaten des Fahrdrahts (2) zu ermitteln, und anhand der Stereo-Lagedaten die Lagedaten der Laufzeitkameras (11, 12, 13, 14) auf Plausibilität zu prüfen.

5. Messvorrichtung (1) nach einem der Ansprüche 1 bis 4,
- wobei die Laufzeitkameraanordnung, die Auswertungseinheit und die Ansteuereinheit in einem abgedichteten Gehäuse (5) mit einer Kameraöffnungen und Beleuchtungsöffnungen aufweisenden Deckplatte (6) und mit einer Schnittstelle zur Anbindung an das Schienenfahrzeug (3) angeordnet sind.

6. Messvorrichtung (1) nach einem der vorangehenden Ansprüche,
- wobei die Auswertungseinheit mit einem Bewegungssensor zur Erfassung einer betriebsbedingten Bewegung des Referenzpunktes (R) relativ zur Schienenoberkante und/oder zur Gleismitte (M) verbunden ist.

7. Messvorrichtung (1) nach einem der vorangehenden Ansprüche,
- wobei die Auswertungseinheit mit einem Positionssensor zur Erfassung einer aktuellen Position des Schienenfahrzeugs (3) verbunden ist.

8. Schienenfahrzeug (3) mit einer Messvorrichtung (3) nach einem der vorangehenden Ansprüche.

## Claims

1. Measuring device (1) for ascertaining the position of a contact wire (2) of an overhead contact line system assigned to a track relative to a rail vehicle (3) travelling on the track, comprising
- a time-of-flight camera arrangement arranged on the rail vehicle (3) for detecting image data with depth information of a capture region (16) containing the contact wire (2),
- wherein the time-of-flight camera arrangement has a plurality of time-of-flight cameras (11, 12, 13, 14), **characterised in that**
- each time-of-flight camera (11, 12, 13, 14) has a sensor arrangement with a matrix-type arrangement of sensor pixels,
- wherein in order to reduce the recording time for high travel speeds of the rail vehicle (3), the number of rows of sensor pixels to be read out can be adapted,
- wherein the time-of-flight camera arrangement
- comprises a first time-of-flight camera (11), which is arranged in the centre of the vehicle (M) and has an optical unit with a vertical optical axis (A1) and with a focal length for capturing contact wires (2), which run in a close, lower section (16U) of the capture region (16),
- comprises a second time-of-flight camera (12), which is arranged in the centre of the vehicle (M) and has an optical unit with a vertical optical axis (A2) and with a focal length for capturing contact wires (2), which run in a remote, upper section (160) of the capture region (16), and
- comprises a third time-of-flight camera (13) and a fourth time-of-flight camera (14),
which are arranged in symmetry outside of the centre of the vehicle (M) and have an optical unit with optical axes (A3, A4) tilted outward about an acute angle with respect to the centre of the vehicle (M) and with a focal length for detecting contact wires (2), which run in lateral edge regions (16S) of the close, lower section (16U) of the capture region (16), and
- wherein the measuring device (1) comprises an evaluation unit, which is embodied to estimate position data of the contact wire (2) using different estimation methods and to determine the relative position (X, Z) of the contact wire (2) by spatial and temporal fusion of the position data.

2. Measuring device (1) according to claim 1,
further having
- at least one video camera (15) for capturing image data with colour information of the capture region (16) containing the contact wire (2) and an evaluation facility for the image data for monitoring the interruption of the time-of-flight camera arrangement.

3. Measuring device (1) according to claim 1 or 2,
- wherein the time-of-flight camera arrangement has a control unit for sequential trigging of the time-of-flight camera (11, 12, 13, 14) in the manner of a master-slave arrangement.

4. Measuring device (1) according to one of claims 1 to 3,
- wherein time-of-flight cameras (11, 12, 13, 14) arranged at a distance from one another form a stereo base,
- wherein the evaluation unit is embodied to combine image data of time-of-flight cameras (11, 12, 13, 14) of a stereo base to form stereo image data and therefrom to ascertain stereo position data of the contact wire (2), and to check the position data of the time-of-flight cameras (11, 12, 13, 14) for plausibility using the stereo position data.

5. Measuring device (1) according to one of claims 1 to 4,
- wherein the time-of-flight camera arrangement, the evaluation unit and the control unit are arranged in a sealed housing (5) with a cover plate (6) having camera openings and lighting openings and with an interface for connection to the rail vehicle (3).

6. Measuring device (1) according to one of the preceding claims,
- wherein the evaluation unit is connected to a motion sensor for capturing an operational movement of the reference point (R) relative to the rail top edge and/or to the centre of the track (M).

7. Measuring device (1) according to one of the preceding claims,
- wherein the evaluation unit is connected to a position sensor for capturing a current position of the rail vehicle (3).

8. Rail vehicle (3) with a measuring device (3) according to one of the preceding claims.

## Revendications

1. Dispositif (1) de mesure pour la détermination de la position relative, par rapport à un véhicule (3) ferroviaire empruntant une voie, d'un fil (2) de contact d'une installation de caténaire associée à la voie, comprenant
- un agencement de caméra de temps de parcours monté sur le véhicule (3) ferroviaire pour la saisie de données d'image ayant une information en profondeur d'une zone (16) de détection contenant le fil (2) de contact,
- dans lequel l'agencement de caméra de temps de parcours a une pluralité de caméras (11, 12, 13, 14) de temps de parcours, **caractérisé**
- **en ce que** chaque caméra (11, 12, 13, 14) de temps de parcours a un agencement capteur ayant un agencement de type matriciel de pixels de capteur,
- dans lequel, pour la réduction du temps d'enregistrement pour de grandes vitesses de déplacement du véhicule (3) ferroviaire, le nombre de lignes à lire de pixels de capteur est adaptable,
- dans lequel l'agencement de caméra de temps de parcours
- comprend une première caméra (11) de temps de parcours, qui est montée au milieu (M) du véhicule et a une unité d'optique ayant un axe (A1) optique vertical et une distance focale pour la détection de fils (2) de contact, qui s'étendent dans une partie (16U) inférieure proche de la zone (16) de détection,
- comprend une deuxième caméra (12) de temps de parcours, qui est montée au milieu (M) du véhicule et qui a une unité d'optique ayant un axe (A2) optique vertical et une distance focale pour la détection de fils (2) de contact, qui s'étendent dans une partie (160) supérieure loin de la zone (16) de détection, et
- qui comprend une troisième caméra (13) de temps de parcours et une quatrième caméra (14) de temps de parcours,
qui sont montées symétriquement en dehors du milieu (M) du véhicule et qui ont une unité d'optique ayant des axes (A3, A4) optiques basculés vers l'extérieur d'un angle aigu par rapport au milieu (M) du véhicule et ayant une distance focale pour la détection de fils (2) de contact, qui s'étendent dans des parties (16S) latérales de bord de la partie (16U) inférieure proche de la zone (16) de détection,
et
- dans lequel le dispositif (1) de mesure comprend une unité d'évaluation, qui est constituée pour évaluer, à l'aide de procédés d'évaluation différents, des données de position du fil (2) de contact et pour déterminer, par fusion spatiale et temporelle des données de position, la position (X, Z) relative du fil (2) de contact.

2. Dispositif (1) de mesure suivant la revendication 1, comprenant en outre
- au moins une caméra (15) vidéo pour la saisie de données d'image ayant une information colorée de la zone (16) de détection contenant le fil (2) de contact et un dispositif d'évaluation des données d'image pour le contrôle de perturbation de l'agencement de caméra de temps de parcours.

3. Dispositif (1) de mesure suivant la revendication 1 ou 2,
- dans lequel l'agencement de temps de parcours a une unité de commande pour le déclenchement séquentiel des caméras (11, 12, 13, 14) de temps de parcours à la manière d'un agencement maître-esclave.

4. Dispositif (1) de mesure suivant l'une des revendications 1 à 3,
- dans lequel des caméras (11, 12, 13, 14) de temps de parcours montées à distance les unes des autres forment une base stéréo,
- dans lequel l'unité d'évaluation est constituée pour combiner des données d'image de caméras (11, 12, 13, 14) de temps de parcours d'une base stéréo en des données d'image stéréo et pour en déterminer des données de position stéréo du fil (2) de contact et pour contrôler la vraisemblance, à l'aide des données de position stéréo, des données de position des caméras (11, 12, 13, 14) de temps de parcours.

5. Dispositif (1) de mesure suivant l'une des revendications 1 à 4,
- dans lequel l'agencement de caméra de temps de parcours et l'unité de commande sont disposés dans un boîtier (5) étanche ayant une plaque (6) de recouvrement comportant des ouvertures de caméra et des ouvertures d'éclairage et ayant une interface de connexion au véhicule (3) ferroviaire.

6. Dispositif (1) de mesure suivant l'une des revendications précédentes,
- dans lequel l'unité d'évaluation est reliée à un capteur de déplacement pour la détection d'un déplacement, dû au fonctionnement, du point (R) de référence par rapport au niveau supérieur du rail et/ou au milieu (M) de la voie.

7. Dispositif (1) de mesure suivant l'une des revendications précédentes,
- dans lequel l'unité d'évaluation est connectée à un capteur de position pour la détection d'une position en cours du véhicule (3) ferroviaire.

8. Véhicule (3) ferroviaire ayant un dispositif (3) de mesure suivant l'une des revendications précédentes.
